# EUROPÄISCHE PATENTANMELDUNG

(11) **EP 1 962 261 A2**
(43) Veröffentlichungstag der Anmeldung: **27.08.2008**
(21) Anmeldenummer: 08002343.5
(22) Anmeldetag: 08.02.2008
(51) Int. Cl.: G09F 19/22, G09F 13/04

(54) **Unterputz-Installationsgerät zur Informationsdarstellung**

(30) Priorität: 22.02.2007 DE 102007008625
(71) Anmelder: ABB AG, 68309 Mannheim (DE)
(72) Erfinder: Ulbrich, Stefan Dipl.-Ing., 58579 Schalksmühle (DE)
(74) Vertreter: Miller, Toivo

(57) **Zusammenfassung**

Es wird ein Unterputz-Installationsgerät zur Informationsdarstellung mit einem Gerätesockel (2) vorgeschlagen, welcher über Anschlussklemmen (3) an ein Netz anschließbar ist. Ein von einer LED-Ansteuervorrichtung (19) angesteuertes LED-Anzeigeleuchtfeld (7) ist am Gerätesockel (2) angeschlossen, in welchem ein LED-Symbol zur Anzeige gelangt, welches in einem nichtflüchtigen Speicher (17) abgespeichert ist, wobei eine Verarbeitungseinheit (16) die LED-Ansteuervorrichtung (19) in Abhängigkeit der abgespeicherten Information beaufschlagt.

## Beschreibung

Die Erfindung bezieht sich auf ein Unterputz-Installationsgerät zur Informationsdarstellung gemäß dem Oberbegriff des Anspruchs 1.

Aus der DE 198 12 504 B4 ist ein elektrisches (Unterputz- oder Aufputz-) Installationsgerät, insbesondere Lichtsignalgerät bekannt, enthaltend einen Geräteeinsatz mit Gehäuseteilen und Leuchtmittel, wobei auf dem Geräteeinsatz eine Grundplatte aufgesteckt ist, die zur Aufnahme einer Leiterplatte dient, die oberseitig mit Leuchtmitteln (Glimmleuchtstofflampen) und elektronischen Bauelementen versehen ist und von einer lichtdurchlässigen Isolierstoffhaube abgedeckt ist, die ihrerseits durch eine Abdeckung fixiert ist und über eine Lichtaustrittsausnehmung verfügt, in der eine Schrift- oder Kennzeichenfolie eingelegt ist, die von einer lichtdurchlässigen Schutzblende fixiert wird.

Aus der DE 10 2005 016 082 A1 ist ein Unterputz-Installationsgerät mit Geräteeinsatz, C-Scheibe und Tragring bekannt, wobei zwischen C-Scheibe und einer transluzenten Streuscheibe eine Beschriftungsfolie einlegbar und im Innenraum des Geräteeinsatzes eine Leiterplatte integriert ist. Die Leiterplatte weist auf ihrer Oberfläche mehrere gleichmäßig verteilt Leuchtdioden auf, welche die Beschriftungsfolie durchleuchten.

Der Erfindung liegt die Aufgabe zugrunde, ein Unterputz-Installationsgerät zur Informationsdarstellung der eingangs genannten Art anzugeben, mit dem in einfacher Art und Weise unterschiedliche Symbole (Schrift oder Kennzeichen) anzeigbar sind.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass es für den Nutzer in einfacher und kostengünstiger Weise auch zu jedem späteren Zeitpunkt möglich ist, das gewünschte Symbol aus mehreren zur Verfügung stehenden Symbolen (Schrift oder Kennzeichen) auszuwählen. Des Weiteren ist eine Anpassung des angezeigten Symbols an den jeweiligen konkreten Anwendungsfall z. B. durch Ändern der Farbe und/oder der Helligkeit der Anzeige möglich. Selbst eine Änderung der Formgebung des Symbols und die Kreation eines neuen Symbols sind möglich. Es ist nicht mehr erforderlich, das gewünschte Symbol zu gravieren bzw. auszufräsen.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: einen seitlichen Schnitt durch ein Unterputz-Installationsgerät zur Informationsdarstellung,
- Fig. 2: eine Sicht auf die Frontseite eines Unterputz-Installationsgeräts zur Informationsdarstellung,
- Fig. 3: ein Prinzipschema der elektrischen Schaltung des Unterputz-Installationsgeräts zur Informationsdarstellung.

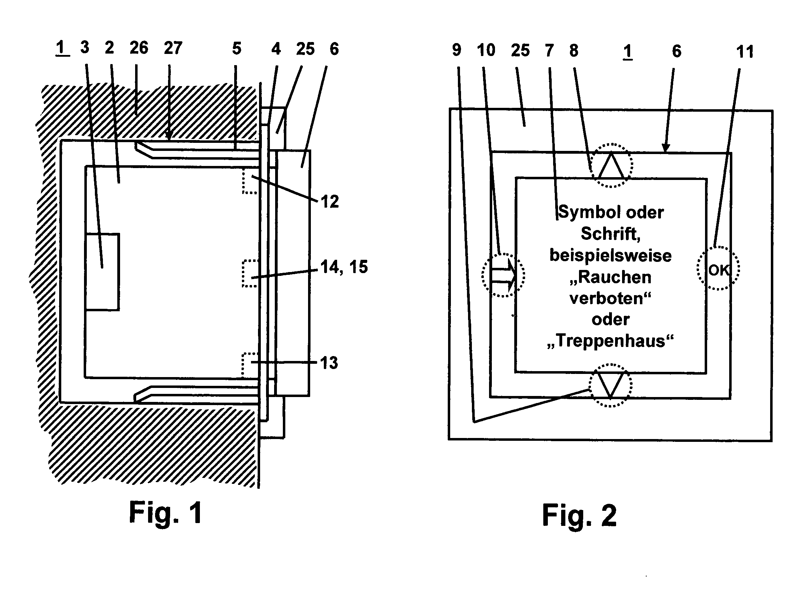

In Fig. 1 ist ein seitlicher Schnitt durch ein Unterputz-Installationsgerät zur Informationsdarstellung, nachfolgend auch als Lichtsignal-Unterputz-Installationsgerät bezeichnet, dargestellt. Das Lichtsignal-Unterputz-Installationsgerät 1 weist wie jedes Unterputz-Installationsgerät einen Gerätesockel 2 mit Anschlussklemmen 3 (zum Anschluss an ein 230-V-Netz), Tragring 4 und Spreizen 5 für die Montage in einer Unterputzdose 27 auf, welche in einer Wand 26 befestigt ist. Auf den Gerätesockel 2 ist eine schwimmende Wippe 6 aufgesetzt, welche durch Drücken auf ihren oberen Betätigungsabschnitt / unteren Betätigungsabschnitt / linken Betätigungsabschnitt / rechten Betätigungsabschnitt jeweils unterschiedliche, am Gerätesockel befestigte Mikrotaster beaufschlagt, was ein Einstellen/Abarbeiten unterschiedlicher Funktionen ermöglicht, wie nachfolgend noch im Einzelnen beschrieben wird.

Das Lichtsignal-Unterputz-Installationsgerät 1 wird durch einen mit dem Gerätesockel 2 verbindbaren, die schwimmende Wippe umschließenden Abdeckrahmen 25 komplettiert, wobei dieser Abdeckrahmen 25 entsprechend dem Kundenwunsch aus verschiedenen Design-Programmen ausgewählt werden kann. Mittels der Wippe 6 können am Gerätesockel 2 angeordnete Mikrotaster 12 - 15 betätigt werden, wie nachfolgend noch näher erläutert wird.

In Fig. 2 ist eine Sicht auf die Frontseite eines Unterputz-Installationsgeräts zur Informationsdarstellung dargestellt. Es ist die innerhalb des Abdeckrahmens 25 befindliche schwimmende Wippe 6 zu erkennen. Diese schwimmende Wippe 6 vereint unterschiedliche Funktionen, denn einerseits befindet sich ein zentrales LED-Anzeigeleuchtfeld (LED-Panel) 7 innerhalb der Wippe 6 und andererseits ist es möglich, durch Drücken auf den oberen Betätigungsabschnitt 8 oder den unteren Betätigungsabschnitt 9 oder den linken Betätigungsabschnitt 10 oder den rechten Betätigungsabschnitt 11 folgende Funktionen abzurufen:
- Der linke Betätigungsabschnitt 10 stellt die "Menü-Taste" dar, d. h. beim Drücken auf den linken Betätigungsabschnitt 10 wird das Menü gewechselt und über die Betätigungsabschnitte(Betätigungstasten) 8 und 9 erfolgt die Auswahl "Anzeigemodus" (Leuchtanzeige eines eingestellten Symbols) in den "Einstellmodus" (Auswahl eines gewünschten Symbols / Auswahl einer Farbe für das gewünschte Symbol / Auswahl der Helligkeit des gewünschten Symbols / Kreation eines gewünschten Symbols / Eingabe eines Codes / Kreation eines Codes) und umgekehrt. Die Bestätigung erfolgt über den Betätigungsabschnitt 11.
- Der obere Betätigungsabschnitt 8 bzw. der untere Betätigungsabschnitt 9 stellen die "Scroll-Up-Taste" bzw. die "Scroll-Down-Taste" dar, d. h. durch Drücken auf den oberen Betätigungsabschnitt 8 bzw. auf den unteren Betätigungsabschnitt 9 kann beim "Einstellmodus" durch das im LED-Anzeigeleuchtfeld 7 angezeigte Menü auf- und abgescrollt werden (horizontaler Bilddurchlauf, Auf- und Abrollen innerhalb der Bildschirmanzeige), um hierdurch einen gewünschten Menüpunkt anzuwählen.
- Der rechte Betätigungsabschnitt 11 stellt die "Bestätigungs-Taste" ("OK-Taste") dar, d. h. beim Drücken auf den rechten Betätigungsabschnitt 11 werden ein aktuell angewählter Menüpunkt respektive eine aktuelle Eingabe bestätigt.

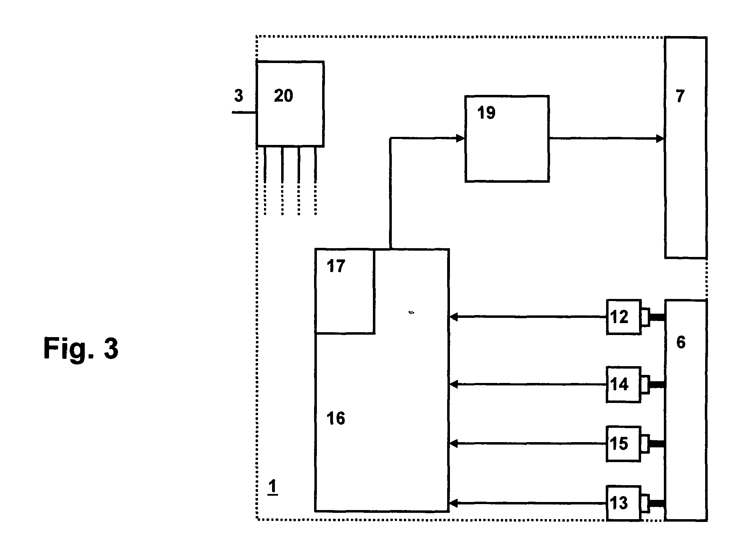

Folgende Funktionen sind mittels des Lichtsignal-Unterputz-Installationsgeräts 1 realisierbar:
A) Es ist die Auswahl eines im LED-Anzeigeleuchtfeld 7 anzuzeigenden LED-Symbols aus mehreren zur Verfügung stehenden, abgespeicherten LED-Symbolen möglich,
   - indem zunächst durch Betätigung des linken Betätigungsabschnitts 10 der "Einstellmodus" angewählt wird,
   - indem anschließend im "Einstellmodus" der Menüpunkt "Symbol-Auswahl" mit Hilfe der Betätigungsabschnitte 8 und 9 angewählt wird,
   - indem der angewählte Menüpunkt mit Hilfe des Betätigungsabschnitts 11 bestätigt wird,
   - indem danach mittels der Betätigungsabschnitte 8 und 9 das gewünschte LED-Symbol angewählt wird,
   - indem das angewählte Symbol mit Hilfe des Betätigungsabschnitts 11 bestätigt wird,
   - indem durch Betätigung des linken Betätigungsabschnitts 10 der "Anzeigemodus" angewählt wird.
B) Es ist möglich, eine Farbe für das anzuzeigende LED-Symbol vorzugeben,
   - indem zunächst durch Betätigung des linken Betätigungsabschnitts 10 der "Einstellmodus" angewählt wird,
   - indem im "Einstellmodus" der Menüpunkt "Farb-Auswahl" mit Hilfe der Betätigungsabschnitte 8 und 9 angewählt wird,
   - indem danach dieser angewählte Menüpunkt mit Hilfe des Betätigungsabschnitts 11 bestätigt wird,
   - indem danach mittels der Betätigungsabschnitte 8 und 9 die gewünschte Farbe angewählt wird,
   - indem die angewählte Farbe mit Hilfe des Betätigungsabschnitts 11 bestätigt wird,
   - indem durch Betätigung des linken Betätigungsabschnitts 10 der "Anzeigemodus" angewählt wird.
C) Gemäß der unter B) beschriebenen Art und Weise ist es möglich, die Helligkeit für das LED-Symbol vorzugeben, d. h. an Stelle des Menüpunkts "Farb-Auswahl" tritt der Menüpunkt "Helligkeits-Auswahl". Dabei wird die Helligkeit vorzugsweise durch Änderung des Verhältnisses zwischen Einschaltdauer und Ausschaltdauer beim Pulsen der LEDs des Anzeigeleuchtfeldes eingestellt. Das Pulsen erfolgt durch eine in Fig. 3 gezeigte LED-Ansteuervorrichtung 19.
D) Es ist möglich, ein eigenes LED-Symbol zu kreieren und abzuspeichern,
   - indem zunächst durch Betätigung des linken Betätigungsabschnitts 10 der "Einstellmodus" angewählt wird,
   - indem im "Einstellmodus" der Menüpunkt "Symbol kreieren" mit Hilfe der Betätigungsabschnitte 8 und 9 angewählt wird,
   - indem danach dieser angewählte Menüpunkt mit Hilfe des Betätigungsabschnitts 11 bestätigt wird,
   - indem danach sukzessive mittels der Betätigungsabschnitte 8 und 9 die einzelnen Bildpunkte des LED-Anzeigeleuchtfelds angewählt und mit Hilfe des Betätigungsabschnitts 11 bestätigt werden,
   - indem den einzelnen Bildpunkten sukzessive mittels der Betätigungsabschnitte 8 und 9 eine gewünschte Farbe oder bei einer Einfach-Ausführung lediglich die Information "hell" oder "dunkel" zugeordnet werden, wobei diese Bildpunkt-Informationen jeweils abgespeichert werden.
   Bei der Einfach-Ausführung kann dann für alle mit "hell" gekennzeichneten Bildpunkte die Farbe "weiß" oder eine gewünschte Farbe ausgewählt werden, wie vorstehend unter Ziffer B) behandelt. Für alle mit "dunkel" gekennzeichneten Bildpunkte kann die Farbe "schwarz" oder eine gewünschte Farbe ausgewählt werden.
E) Es ist möglich, eine missbräuchliche Betätigung des Lichtsignal-Unterputz-Installationsgerätes 1 zu verhindern, indem vor Anwahl bestimmter Menüpunkte zunächst ein erforderlicher Code, z. B. PIN-Nr. einzugeben ist. Dies erfolgt,
   - indem zunächst durch Betätigung des linken Betätigungsabschnitts 10 der "Einstellmodus" angewählt wird,
   - indem im "Einstellmodus" der Menüpunkt "Code-Eingabe" mit Hilfe der Betätigungsabschnitt 8 und 9 angewählt wird,
   - indem danach dieser angewählte Menüpunkt mit Hilfe des Betätigungsabschnitts 11 bestätigt wird,
   - indem danach sukzessive mittels der Betätigungsabschnitte 8 und 9 die einzelnen Buchstaben/Ziffern des Codes (z. B. Ziffern der PIN-Nr.) angewählt und mit Hilfe des Betätigungsabschnitts 11 bestätigt werden.
   Nach Eingabe des korrekten Codes können die weiteren Menüpunkte in gewünschter Art angewählt werden.
F) In gleicher Art und Weise kann auch ein zur Bedienung des Lichtsignal-Unterputz-Installationsgeräts erforderlicher Code (PIN-Nr.) zunächst kreiert oder geändert und abschließend abgespeichert werden.

In Fig. 3 ist ein Prinzipschema der elektrischen Schaltung des Unterputz-Installationsgeräts zur Informationsdarstellung dargestellt. Es ist schematisch gezeigt, dass mittels der schwimmenden Wippe 6 vier Mikrotaster 12 - 15 betätigt werden können:
- Beim Drücken auf den oberen Betätigungsabschnitt 8 (Scroll-Up-Taste) wird der Mikrotaster 12 beaufschlagt.
- Beim Drücken auf den unteren Betätigungsabschnitt 9 (Scroll-Down-Taste) wird der Mikrotaster 13 beaufschlagt.
- Beim Drücken auf den linken Betätigungsabschnitt 10 (Menütaste) wird der Mikrotaster 14 beaufschlagt.
- Beim Drücken auf den rechten Betätigungsabschnitt 11 (Bestätigungstaste) wird der Mikrotaster 15 beaufschlagt.

Die von den Mikrotastern 12 - 15 jeweils abgegebenen Signale gelangen zu einer Verarbeitungseinheit 16, was zur entsprechenden Abarbeitung gewünschter Funktionen führt, wie vorstehend unter A) - F) erläutert. Ein der Verarbeitungseinheit 16 zugeordneter nichtflüchtiger Speicher 17 dient zur Abspeicherung von LED-Symbolen und Codes bzw. zum Abruf abgespeicherter LED-Symbole und Codes. Für die Ansteuerung des LED-Anzeigeleuchtfeldes 7 ist eine LED-Ansteuervorrichtung 19 vorgesehen, welche die ausgangsseitigen Ansteuersignale der Verarbeitungseinheit 16 in entsprechende Leistungssignale für die einzelnen LEDs des LED-Anzeigeleuchtfeld umsetzt.

Dabei entspricht eine LED einem Bildpunkt des LED-Anzeigeleuchtfelds 7. Ein Bildpunkt kann in unterschiedlichen Farben aufleuchten. Die zur Versorgung der LEDs des LED-Anzeigeleuchtfelds 7 erforderliche elektrische Energie wird über eine Energieversorgungseinheit 20 und die Anschlussklemmen 3 aus einem Wechselspannungsnetz bezogen. Selbstverständlich versorgt diese Energieversorgungseinheit 20 auch die weiteren Baukomponenten (z. B. Mikrotaster 12 - 15, Verarbeitungseinheit 16) des Lichtsignal-Unterputz-Installationsgeräts 1 mit elektrischer Energie.

Die Anzahl der LEDs des LED-Anzeigeleuchtfelds 7 beträgt z. B. hundert bei einer Größe des Feldes von 5 x 5 cm. Je nach gewünschter Auflösung des LED-Symbols wird die erforderliche Anzahl auch größer oder kleiner sein.

### Bezugszeichenliste:

- 1: Lichtsignal-Unterputz-Installationsgerät
- 2: Gerätesockel
- 3: Anschlussklemmen
- 4: Tragring
- 5: Spreizen
- 6: schwimmende Wippe
- 7: zentrales LED-Anzeigeleuchtfeld (LED-Panel)
- 8: oberer Betätigungsabschnitt = Scroll-Up-Taste
- 9: unterer Betätigungsabschnitt = Scroll-Down-Taste
- 10: linker Betätigungsabschnitt = Menütaste
- 11: rechter Betätigungsabschnitt = Bestätigungstaste (OK-Taste)
- 12: Mikrotaster
- 13: Mikrotaster
- 14: Mikrotaster
- 15: Mikrotaster
- 16: Verarbeitungseinheit
- 17: nichtflüchtiger Speicher
- 18: ---
- 19: LED-Ansteuervorrichtung
- 20: Energieversorgungseinheit
- 21: ---
- 22: ---
- 23: ---
- 24: ---
- 25: Abdeckrahmen
- 26: Wand
- 27: Unterputzdose

## Patentansprüche

1. Unterputz-Installationsgerät zur Informationsdarstellung mit einem Gerätesockel (2), welcher über Anschlussklemmen (3) an ein Netz anschließbar ist, **dadurch gekennzeichnet, dass** ein von einer LED-Ansteuervorrichtung (19) angesteuertes LED-Anzeigeleuchtfeld (7) am Gerätesockel (2) angeschlossen ist, in welchem ein LED-Symbol zur Anzeige gelangt, welches in einem nichtflüchtigen Speicher (17) abgespeichert ist, wobei eine Verarbeitungseinheit (16) die LED-Ansteuervorrichtung (19) in Abhängigkeit der abgespeicherten Information beaufschlagt.

2. Unterputz-Installationsgerät nach Anspruch 1, **dadurch gekennzeichnet, dass** mindestens ein Betätigungselement vorgesehen ist, mit welchem gezielt eine Auswahl eines bestimmten LED-Symbols aus mehreren im Speicher (17) abgespeicherten LED-Symbolen erfolgt.

3. Unterputz-Installationsgerät nach Anspruch 1 oder 2, **dadurch gekennzeichnet, dass** sich das LED-Anzeigeleuchtfeld (7) innerhalb einer als Betätigungselement dienenden Wippe (6) befindet.

4. Unterputz-Installationsgerät nach Anspruch 3, **dadurch gekennzeichnet, dass** die Wippe als schwimmende Wippe (6) ausgebildet ist, deren Kanten als Betätigungsabschnitte (8, 9, 10, 11) zur Beaufschlagung von Mikrotastern (12, 13, 14, 15) dienen, deren Signale der Verarbeitungseinheit (16) zuführbar sind.
